Europäisches Patentamt

European Patent Office

Office européen des brevets

(19)

(11) Numéro de publication : **0 121 105**
**B1**

(12) **FASCICULE DE BREVET EUROPÉEN**

(45) Date de publication du fascicule du brevet :
03.12.86

(21) Numéro de dépôt : 84102161.1

(22) Date de dépôt : 01.03.84

(51) Int. Cl.⁴ : **B 01 D 29/30**, B 01 D 29/36,
B 01 D 29/38, B 01 D 13/00

(54) **Dispositif de filtration d'un liquide.**

(30) Priorité : 04.03.83 FR 8303553

(43) Date de publication de la demande :
10.10.84 Bulletin 84/41

(45) Mention de la délivrance du brevet :
03.12.86 Bulletin 86/49

(84) Etats contractants désignés :
BE CH DE FR GB IT LI NL SE

(56) Documents cités :
FR-A- 2 418 013
FR-A- 2 473 313
FR-A- 2 513 536
US-A- 2 569 748
US-A- 3 398 088
US-A- 4 060 488

(73) Titulaire : **COMPAGNIE GENERALE D'ELECTRICITE**
**Société anonyme dite:**
**54, rue La Boétie**
**F-75382 Paris Cedex 08 (FR)**

(72) Inventeur : **Galaj, Stanislas**
**27, avenue Lenine**
**F-94110 Arcueil (FR)**

(74) Mandataire : **Weinmiller, Jürgen et al**
**Lennéstrasse 9**
**D-8133 Feldafing (DE)**

Jouve, 18, rue St-Denis, 75001 Paris, France

## Description

La présente invention concerne un dispositif de filtration d'un liquide.

Il a déjà été proposé un dispositif de filtration d'un liquide, du type comportant

— un filtre comprenant

une chambre de filtration munie d'une entrée et d'une sortie dudit liquide, une partie de la paroi de cette chambre étant formée par une pièce poreuse en matériau fritté ayant une surface interne tournée vers le volume intérieur de la chambre et une surface externe opposée, les surfaces interne et externe étant parallèles entre elles, la pièce poreuse comportant une membrane dont une surface forme ladite surface interne, les pores de la membrane ayant une dimension inférieure à celle des particules à filtrer contenues dans ledit liquide, chaque pore communiquant avec les pores adjacents,

et une enceinte entourant ladite surface externe, cette enceinte étant munie d'une ouverture de sortie,

— des moyens pour introduire le liquide dans la chambre par son entrée sous une première pression constante,

— des moyens pour imprimer au liquide contenu dans la chambre une vitesse prédéterminée parallèle à ladite surface interne, une partie du liquide traversant la pièce poreuse et étant reçue dans l'enceinte,

— une pompe reliée à la sortie de la chambre et à un premier réservoir pour prélever une autre partie du liquide ayant circulé dans la chambre,

— un appareil de mesure du débit de liquide, branché en série entre l'ouverture de sortie de l'enceinte et un deuxième réservoir,

— un circuit d'asservissement recevant l'information du débit mesuré par l'appareil et capable de commander la pompe pour maintenir un rapport constant prédéterminé entre ce débit et celui de la pompe

— et un organe commandable de refoulement du liquide, branché entre l'ouverture de sortie de l'enceinte et l'appareil de mesure, pour exercer, pendant une durée prédéterminée, une deuxième pression constante de liquide sur la surface externe de la pièce poreuse, en sens inverse de celui de la première pression constante.

Dans ce dispositif connu, le pièce poreuse est constituée par exemple par un tube en céramique comprenant une membrane tubulaire microporeuse, et les moyens pour imprimer au liquide une vitesse prédéterminée parallèle à la surface interne du tube comportent un noyau cylindrique monté en rotation à l'intérieur du tube. La pression inverse exercée sur la paroi extérieure du tube par l'organe de refoulement du liquide a pour effet de décolmater le tube en séparant de la membrane les particules plaquées au cours du filtrage sur ladite surface interne.

Cependant un tel dispositif présente un inconvénient.

En effet lorsqu'on actionne l'organe de refoulement au bout d'une période de filtration relativement longue, il peut arriver que la membrane ne peut plus être décolmatée par la pression inverse de refoulement. Il est nécessaire alors de démonter du filtre la pièce poreuse pour régénérer la membrane par exemple par pyrolyse dans un four à haute température ou par un lavage chimique, ce qui nécessite l'arrêt de la filtration. Pour remédier à cet inconvénient, il est possible de fixer, de manière arbitraire, la cadence de fonctionnement de l'organe de refoulement à un niveau assez élevé. Mais, chaque fois que l'organe de refoulement est mis en marche, une certaine quantité de liquide filtré est envoyée en amont du filtre ce qui augmente la durée de filtration et diminue le rendement du dispositif, exprimé en volume de liquide filtré par unité de temps.

La présente invention a pour but de pallier cet inconvénient.

Elle a pour objet un dispositif de filtration d'un liquide, du type spécifié ci-dessus, caractérisé en ce que, le filtre étant un premier filtre, la première pression constante étant une pression prédéterminée $P_1$, la deuxième pression constante étant une pression prédéterminée $P_2$ grande par rapport à $P_1$, le dispositif comporte en outre

— un deuxième filtre identique au premier filtre, l'entrée du deuxième filtre étant reliée à l'ouverture de sortie de l'enceinte du premier filtre par une première canalisation, la sortie du deuxième filtre étant fermée, l'ouverture de sortie de l'enceinte du deuxième filtre étant reliée à l'appareil de mesure de débit à travers l'organe de refoulement,

— des moyens pour imprimer au liquide contenu dans la chambre du deuxième filtre ladite vitesse prédéterminée parallèlement à la surface interne de la pièce poreuse de cette chambre,

— un manomètre pour mesurer la pression $P_3$ du liquide circulant dans la première canalisation,

— des moyens pour maintenir constante la pression $P_4$ du liquide circulant dans une deuxième canalisation lorsque l'organe de refoulement ne fonctionne pas, cette deuxième canalisation reliant la sortie de l'organe de refoulement à l'entrée de l'appareil de mesure de débit,

— un circuit de traitement recevant les informations des pressions $P_1$, $P_2$, $P_3$ et $P_4$, ce circuit étant capable de déterminer d'une part la valeur de

$$A = P_1 - 2P_3 + P_4$$

et d'autre part la valeur de

$$B = \frac{K}{2N}(P_2 - 2P_1 + P_4),$$

K étant un coefficient de sécurité prédéterminé inférieur à 1, et N un coefficient prédéterminé dépendant de la membrane des pièces poreuses

— et un circuit de commande relié au circuit de traitement et à l'organe de refoulement, ce circuit de commande étant capable de délivrer un signal de commande lorsque les valeurs de A et de B déterminées par le circuit de traitement sont égales entre elles, ce signal de commande déclenchant le fonctionnement de l'organe de refoulement.

Des formes particulières d'exécution de l'objet de la présente invention sont décrites ci-dessous, à titre d'exemple, en référence aux dessins annexés, dans lesquels

la figure 1 représente schématiquement un mode de réalisation du dispositif de filtration selon l'invention

et la figure 2 représente schématiquement un groupe de filtration qui, associé au dispositif représenté sur la figure 1, représente un autre mode de réalisation du dispositif selon l'invention.

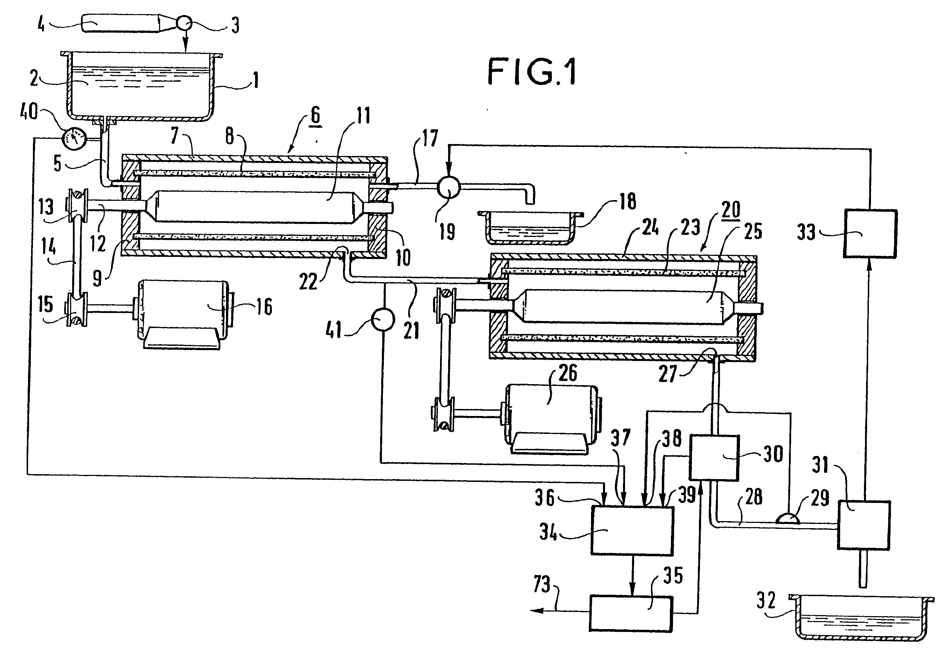

Sur la figure 1 est représenté un réservoir 1 d'un liquide 2 contenant des particules en suspension à filtrer. Le volume du réservoir situé au-dessus de la surface d'équilibre du liquide est en communication avec un détendeur 3 branché à la sortie d'une bouteille de gaz comprimé 4. Une canalisation 5 relie le fond du réservoir 1 avec le volume interne d'un filtre 6. Celui-ci comporte, à l'intérieur d'une enceinte ou enveloppe tubulaire cylindrique 7, un tube coaxial poreux 8 cylindrique de révolution. Les deux extrémités de l'enveloppe tubulaire 7 sont fermées respectivement par deux flasques 9 et 10 sur lesquels s'appuie le tube 8. Un noyau cylindrique coaxial 11 est monté sur un arbre 12 en rotation autour des deux paliers ménagés dans les flasques 9 et 10. Le volume compris entre d'une part le noyau 11 et d'autre part le tube 8 et les flasques 9-10 constitue une chambre de filtration. La canalisation 5 débouche, à travers le flasque 9, à l'entrée de la chambre de filtration.

A une extrémité de l'arbre 12 est fixée une poulie 13 accouplée par une courroie 14 à une poulie 15 montée sur l'arbre d'un moteur d'entraînement 16.

Le tube poreux 8 est constitué d'un matériau rigide fritté, réalisé à partir d'une poudre de céramique ou d'une poudre métallique. Chaque pore de ce matériau communique avec les pores adjacents. Le tube 8 comporte une partie tubulaire périphérique munie de pores dont les dimensions sont très supérieures à celles des particules contenues dans le liquide à filtrer. Cette partie périphérique constitue un support mécanique pour une autre partie tubulaire intérieure qui forme une membrane de filtration de faible épaisseur, les pores de cette membrane ayant une dimension inférieure à celle des particules. Bien entendu, les parties intérieure et extérieure du tube 8 sont coaxiales et solidaires entre elles.

Le flasque 10 comporte une ouverture constituant une sortie de la chambre de filtration. Cette sortie est reliée par des canalisations telles que 17 à un réservoir 18 à travers une pompe volumétrique 19.

Un filtre 20, identique au filtre 6, comporte une chambre de filtration dont l'entrée est reliée par une canalisation 21 à une ouverture 22 ménagée dans l'enveloppe 7 du filtre 6. Le filtre 20 comporte un tube poreux 23, une enveloppe 24 et un noyau cylindrique 25 identiques aux éléments correspondants du filtre 6, ainsi qu'une chambre de filtration dont la sortie est obturée. Le noyau 25 est entraîné en rotation par un moteur 26.

L'enveloppe 24 du filtre 20 comporte une ouverture 27 qui est reliée par des canalisations à un réservoir 32 à travers successivement un organe commandable de refoulement 30 et un appareil de mesure de débit 31 branchés en série. Une soupape 29 est disposée sur la paroi de la canalisation 28 reliant l'organe 30 à l'appareil de mesure 31.

L'appareil 31 est relié électriquement au moteur de la pompe 19 à travers un circuit d'asservissement 33.

L'organe de refoulement 30 est relié électriquement à la sortie d'un circuit de traitement 34 à travers un circuit de commande 35.

Le circuit de traitement 34 comporte quatre entrées 36, 37, 38 et 39. L'entrée 36 est reliée à un manomètre 40 branché sur la canalisation 5. L'entrée 37 est reliée à un manomètre 41 branché sur la canalisation 21. L'entrée 38 reçoit l'information de la pression de fonctionnement de la soupape 29. L'entrée 39 reçoit l'information de la pression inverse de refoulement de l'organe 30.

Le dispositif décrit ci-dessus et illustré par la figure 1 fonctionne de la manière suivante.

La pression du liquide à filtrer, à l'entrée du filtre 6, lue par le manomètre 40, est maintenue à une valeur constante $P_1$ qu'il est possible de régler en agissant sur le détendeur 3. On met ensuite en marche le moteur 16 de façon à soumettre le liquide contenu dans la chambre de filtrage à un mouvement de rotation parallèle à la surface interne du tube 8 et perpendiculaire à l'axe du noyau. Le noyau 11 peut comporter éventuellement des ailettes (non représentées) pour faciliter la mise en rotation du liquide.

Il est possible de réaliser des filtres comportant un noyau axial immobile, et même ne comportant pas de noyau. Dans ce cas on imprime au liquide contenu dans la chambre de filtration un mouvement tangentiel par rapport à la surface interne du tube 8 à l'aide d'une pompe auxiliaire de circulation dont la sortie est branchée en dérivation sur la canalisation 5 et dont l'entrée est branchée en dérivation sur la canalisation 17. Le mouvement tangentiel de circulation du liquide est alors parallèle à l'axe du filtre.

Bien entendu la pièce poreuse de filtration n'est pas nécessairement un tube. En particulier, elle peut être aussi constituée par une ou plusieurs plaques planes, le liquide à filtrer étant alors entraîné suivant une vitesse d'écoulement parallèle à cette plaque où à ces plaques.

Une partie du liquide en mouvement dans la chambre de filtration traverse les pores du tube 8, les particules étant retenues sur la surface interne de la membrane de ce tube. Le filtrat ayant traversé le tube 8 s'écoule dans l'enceinte comprise entre le tube 8 et l'enveloppe 7, puis, à travers l'ouverture 22, dans la canalisation 21 vers l'entrée du filtre 20. Le liquide contenu dans la chambre de filtration du filtre 20 est soumis à une vitesse d'écoulement tangentielle identique à celle du filtre 6, le moteur 26 tournant à la même vitesse que le moteur 16.

Le liquide ayant traversé le tube poreux 23 du filtre 20 s'écoule dans l'enceinte comprise entre l'enveloppe 24 et le tube 23, puis, à travers l'ouverture 27 vers l'organe 30.

La soupape 29 disposée sur la paroi de la canalisation 28 permet de limiter la pression du liquide s'écoulant dans cette canalisation, à une valeur maximale réglable. En effet, par suite de la rotation des noyaux 11 et 25 des filtres 6 et 20, le liquide à filtrer, qui contient généralement du gaz en solution, pourrait libérer des bulles de gaz qui, en se logeant dans les pores de la membrane, risqueraient de les obturer et par ailleurs atténueraient l'effet de la pression inverse de décolmatage.

La soupape fonctionne en pratique dès que les moteurs 16 et 26 sont mis en route ; elle est réglée à une pression $P_4$ inférieure à $P_1$, telle que les bulles de gaz ne puissent se former.

Lorsque le liquide à filtrer contient très peu de gaz, il est possible de supprimer la soupape 29. La canalisation 28 est alors munie d'un récipient à l'air libre, branché en dérivation. La pression du liquide dans la canalisation 28 est alors stabilisée à la pression atmosphérique.

L'organe de refoulement 30 comporte essentiellement un cylindre dans lequel coulisse un piston et des moyens pour commander la course du piston chaque fois que l'organe 30 reçoit un signal de commande provenant du circuit 35, de façon à refouler le filtrat vers le filtre en sens inverse de son écoulement normal. L'organe 30 crée ainsi une pression inverse $P_2$, grande par rapport à $P_1$. Cette pression inverse est transmise à travers le filtre 20 (dont la membrane ne peut pas se colmater puisqu'elle est toujours traversée par un liquide débarrassé de particules) vers le filtre 6, de façon à exercer une pression inverse supérieure ou égale à $P_2/2$ sur la surface intérieure du tube poreux 8 du filtre 6. Cette pression inverse permet de décoller de la surface interne du tube poreux 8 les particules solides qui obstruent les pores de la membrane de ce tube. Lorsque la membrane du tube 8 n'est pas obturée, la pression inverse s'exerçant sur ce tube est égale à $P_2/2$. La pression inverse $P_2$ créée par la course du piston de l'organe 30 est réglée à une valeur constante qui peut être choisie avantageusement aussi grande que possible, compte tenu de la résistance mécanique du tube de filtration. Cette pression inverse est exercée, à chaque manœuvre de l'organe 30, pendant un temps prédéterminé, de l'ordre d'une demi-seconde.

Pendant le fonctionnement normal du dispositif, l'organe 30 n'étant pas commandé, le liquide sortant du filtre 20 par l'ouverture 27 s'écoule dans l'organe 30 et l'appareil de mesure de débit 31 vers le réservoir 32, l'organe 30 ne s'opposant pas à l'écoulement du liquide. Le circuit d'asservissement 33 reçoit l'information du débit de filtrat mesuré par l'appareil 31 et commande en retour la rotation de la pompe volumétrique 19, de façon à maintenir un rapport constant prédéterminé entre le débit de filtrat et celui du liquide retenu dans la chambre de filtration du filtre 6 par la membrane du tube 8. En général, ce rapport constant est fixé au départ selon le degré désiré de concentration du liquide à filtrer.

Le circuit de traitement 34 reçoit les informations suivantes :
— la pression $P_1$ lue par le manomètre 40,
— la pression inverse $P_2$ à laquelle est réglé l'organe de refoulement 30,
— la pression $P_3$ lue par le manomètre 41, du liquide circulant dans la canalisation 21
— et la pression $P_4$ à laquelle est réglée la soupape 29.

A partir de ces informations, le circuit de traitement 34 détermine à chaque instant la valeur de l'expression A définie par la relation suivante :

$$A = (P_1 - P_3) - (P_3 - P_4)$$

soit

$$A = P_1 - 2 P_3 + P_4$$

Le circuit 34 détermine aussi la valeur de l'expression B définie par la relation suivante :

$$B = \frac{K}{2\,N} \left[ (P_2 - P_1) - (P_1 - P_4) \right]$$

soit

$$B = \frac{K}{2\,N} (P_2 - 2 P_1 + P_4) .$$

4

B est une valeur constante lorsque $P_1$, $P_2$ et $P_4$ sont réglés.

K est un coefficient de sécurité dont la valeur est légèrement inférieure à 1. On peut fixer au départ, par exemple, une valeur de K égale à 0,9 ou 0,95.

N correspond au nombre de couches de grains que comporte, en épaisseur, la membrane du tube poreux de filtration. On sait que cette membrane a une structure granulaire puisqu'elle est constituée d'une poudre frittée d'un matériau tel qu'un métal ou une céramique. Si le nombre N n'est pas donné directement par le constructeur du tube poreux, il est possible de le déterminer par examen d'une vue agrandie d'une section de cette membrane. Un cliché réalisé à l'aide d'un microscope, fait apparaître dans une telle section une succession de grains juxtaposés. Il est facile de déterminer, à partir de ce cliché, le nombre moyen de grains, par unité de longueur, coupés par une ligne arbitraire tracée sur ce cliché. Connaissant l'épaisseur de la membrane (qui peut être aussi déterminée à l'aide du cliché), on peut en déduire le nombre N de couches de grains disposées dans l'épaisseur de la membrane.

Au début de l'opération de filtration, le tube poreux 8 est exempt de particules. En pratique la valeur de A est inférieure à celle de B.

Au cours de l'opération de filtration, des particules du liquide viennent s'agglutiner sur la paroi interne du tube 8, provoquant une diminution progressive de la pression $P_3$. Il en résulte une augmentation de A en valeur algébrique, alors que la valeur de B est constante après réglage de $P_1$, $P_2$ et $P_4$.

Or, au moment où A est égal à B/K, la membrane 8 est dans un état de colmatage critique : si on continue alors la filtration sans actionner l'organe de refoulement 30, le colmatage de la membrane devient tellement important qu'il est impossible de le supprimer en actionnant l'organe de refoulement.

Lorsque A = B (c'est-à-dire quelques instants avant que A ne soit égal à B/K), le circuit 35 délivre un signal de commande qui déclenche le fonctionnement de l'organe de refoulement 30. Il en résulte, comme il a été dit plus haut, un décolmatage de la membrane du tube 8. On est ainsi ramené sensiblement aux conditions du début de la filtration.

L'organe de refoulement 30 est ainsi actionné chaque fois que A = B, à un instant optimal, ce qui permet d'éviter un colmatage irréversible de la membrane. Il n'est donc pas nécessaire d'interrompre l'opération de filtration pour démonter le tube poreux du filtre 6, afin de régénérer sa membrane par exemple dans un four à haute température.

Les valeurs de A et B, à partir desquelles est déterminé l'instant optimal de déclenchement de l'organe de refoulement, dépendent notamment de la pression variable $P_3$ à l'entrée du filtre 20 et de la pression $P_4$ à la sortie de ce filtre, ce qui explique et justifie la présence de ce filtre 20 dans le dispositif illustré par la figure 1.

L'opération de filtration d'un liquide donné comprend un certain nombre de cycles successifs au cours desquels le débit moyen de filtration reste sensiblement constant, ce débit moyen étant situé entre un débit maximal et un débit minimal obtenus respectivement au début et à la fin de chaque cycle.

De plus, la durée totale de filtration d'un liquide donné est réduite par rapport à celle de la filtration réalisée à l'aide d'un dispositif selon l'art antérieur. En effet, en utilisant le dispositif selon l'invention, les opérations de décolmatage par application de la pression inverse sont plus rares, puisqu'elles ne sont déclenchées que lorsque l'état de colmatage de la membrane est au niveau maximal compatible d'un décolmatage par pression inverse.

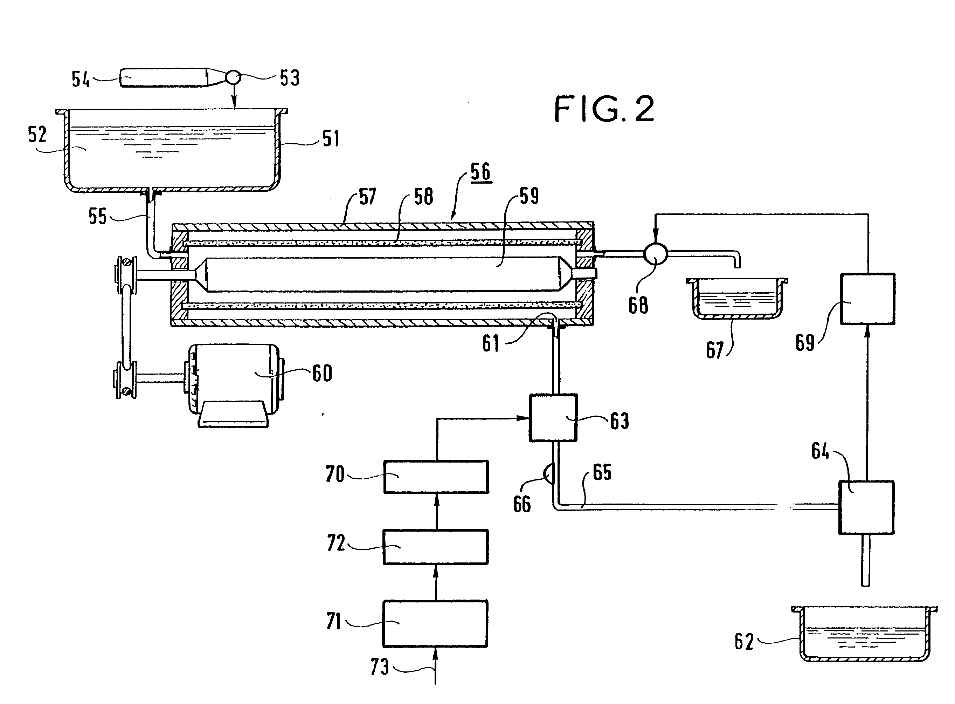

Le dispositif représenté sur la figure 1 permet de commander le fonctionnement d'un ou plusieurs groupes de filtration tels que celui représenté sur la figure 2, un tel groupe pouvant avoir un débit de filtration plus important que celui du dispositif illustré par la figure 1.

Sur la figure 2, est représenté un réservoir 51 contenant un liquide à filtrer 52 identique au liquide 2 (figure 1). Le volume du réservoir situé au-dessus de la surface d'équilibre du liquide 52 est en communication avec un détendeur 53 branché à la sortie d'une bouteille de gaz comprimé 54. Une canalisation 55 relie le fond du réservoir 51 avec le volume interne d'un filtre 56. Celui-ci est d'un type analogue au filtre 6 illustré par la figure 1. Le filtre 56 comporte en particulier un tube de filtration 58 dont la forme et la structure de la section droite sont absolument identiques à la forme et à la structure de la section droite du tube 6. Cependant, comme représenté, la longueur du tube 58 est avantageusement plus grande que celle du tube 8, la surface de filtration étant ainsi augmentée. Par rapport au filtre 6, le filtre 56 comporte un noyau axial 59 de même section, mais plus long que le noyau 11. Le noyau 59 est entraîné en rotation autour de l'axe du filtre 56 à l'aide d'un moteur 60.

Le filtre 56 comporte une enveloppe extérieure 57 munie d'une ouverture 61 reliée par des canalisations à un réservoir 62 à travers un organe de refoulement 63 et un appareil de mesure de débit 64 disposés en série. La canalisation 65 reliant l'organe 63 et l'appareil de mesure 64 est munie d'une soupape 66, d'un type analogue à celui de la soupape 29.

La chambre de filtration du filtre 56 comporte une sortie reliée par des canalisations à un réservoir 67 à travers une pompe volumétrique 68.

L'information du débit mesuré par l'appareil 64 est transmise par une connexion électrique à un circuit d'asservissement 69 dont la sortie est reliée à l'entrée d'un moteur électrique entraînant la pompe volumétrique 68.

L'organe de refoulement 63 est relié électriquement à la sortie d'un circuit de commande 70. La sortie d'une horloge 71 est reliée à l'entrée d'une mémoire 72 dont la sortie est reliée à l'entrée du circuit 70.

L'entrée de l'horloge 71 est reliée par une connexion électrique 73 à une sortie du circuit de commande 35 (figure 1).

Le dispositif décrit ci-dessus et illustré par l'exemple des figures 1 et 2 fonctionne de la manière suivante.

Avant la mise en marche de l'installation, la pression d'entrée du liquide dans la chambre de filtration du filtre 6 est réglée à la valeur $P_1$, l'organe de refoulement 30 est réglé pour exercer une pression inverse $P_2$, et la soupape 29 est réglée à une pression $P_4$. Le circuit d'asservissement 33 est réglé de manière à maintenir un rapport constant « C » entre le débit de filtrat mesuré par l'appareil 31 et le débit de la pompe 19 du dispositif illustré par la figure 1.

Le groupe de filtration représenté sur la figure 2 est alors réglé de la manière suivante.

Le moteur 60 doit tourner à une vitesse de rotation identique à celle des moteurs 16 et 26, de façon à entraîner le liquide contenu dans la chambre de filtration à la même vitesse.

La pression d'entrée du liquide dans le filtre 56 est réglée à une valeur $Q_1$ telle que

$$Q_1 = \frac{P_1 + P_4}{2}$$

et l'organe de refoulement est réglé de façon à exercer une pression inverse $Q_2$, telle que

$$Q_2 = \frac{P_2 + P_4}{2}$$

La soupape 66 doit être réglée à la pression

$$Q_4 = P_4$$

De plus, le circuit d'asservissement 69 doit être réglé de manière à maintenir le même rapport constant C entre le débit de filtrat mesuré par l'appareil 64 et le débit de la pompe 68.

Bien entendu, les dispositifs de filtration illustrés sur les figures 1 et 2 sont disposés à proximité l'un de l'autre, de manière qu'ils puissent fonctionner à des température ambiantes sensiblement identiques.

On met en marche d'abord le dispositif illustré par la figure 1 de la manière indiquée plus haut. A l'instant de la mise en marche, on déclenche le fonctionnement de l'horloge 71. Ce déclenchement peut être manuel ou peut être commandé automatiquement par un système non représenté dès que les moteurs électriques 16 et 26 sont alimentés.

Lorsque l'organe de refoulement 30 est mis en marche pour la première fois, l'horloge 71 reçoit un signal provenant du circuit 35 et délivre un signal représentatif du temps $\Delta t_1$ qui s'est écoulé depuis le début de la filtration.

De même, lorsque l'organe 30 est mis en marche pour la deuxième fois et les fois suivantes, l'horloge 71 délivre un signal représentatif des temps $\Delta t_2$, $\Delta t_3$ ... $\Delta t_n$ séparant les instants successifs de déclenchement de l'organe de refoulement 30.

L'information des intervalles de temps $\Delta t_1$, $\Delta t_2$ ... $\Delta t_n$ est conservée dans la mémoire 72.

L'existence ce cette mémoire permet de mettre en marche le groupe de filtration représenté sur la figure 2 après la mise en marche de celui illustré par la figure 1. En effet la mémoire 72 comporte des moyens pour délivrer, à partir de l'instant de mise en marche du groupe de filtration représenté sur la figure 2, des signaux successifs au bout des temps respectifs $\Delta t_1$, $\Delta t_2$ ... $\Delta t_n$ conservés en mémoire. Ces signaux sont transmis au circuit de commande 70 qui déclenche le fonctionnement de l'organe de refoulement 63 pendant une durée égale à celle du fonctionnement de l'organe 30.

On voit donc que le dispositif représenté sur la figure 1 est en fait un groupe pilote capable de déterminer les temps $\Delta t_1$, $\Delta t_2$ ... $\Delta t_n$, ce groupe pilote étant apte à commander à l'instant adéquat le fonctionnement de l'organe de refoulement d'un ou de plusieurs groupes de filtration tels que celui représenté sur la figure 2.

Le dispositif de filtration selon la présente invention peut être utilisé pour filtrer des liquides organiques tels le lait, le vin ou la bière. Il peut être aussi utilisé pour filtrer des eaux boueuses afin d'obtenir, après stérilisation, de l'eau potable.

## Revendications

1. Dispositif de filtration d'un liquide contenant des particules en suspension, comportant
   — un filtre (6) comprenant
      une chambre de filtration munie d'une entrée et d'une sortie dudit liquide, une partie de la paroi de cette chambre étant formée par une pièce poreuse (8) en matériau fritté ayant une surface interne tournée vers le volume intérieur de la chambre et une surface externe opposée, les surfaces interne et externe étant parallèles entre elles, la pièce poreuse comportant une membrane dont une surface forme ladite

6

surface interne, les pores de la membrane ayant une dimension inférieure à celle des particules à filtrer contenues dans ledit liquide, chaque pore communiquant avec les pores adjacents

et une enceinte (7) entourant ladite surface externe, cette enceinte étant munie d'une ouverture de sortie (22),

— des moyens (1, 3, 4) pour introduire le liquide dans la chambre par son entrée sous une première pression constante,

— des moyens (11-16) pour imprimer au liquide contenu dans la chambre une vitesse prédéterminée parallèle à ladite surface interne, une partie du liquide traversant la pièce poreuse (8) et étant reçue dans l'enceinte,

— une pompe (19) reliée à la sortie de la chambre et à un premier réservoir (18) pour prélever une autre partie du liquide ayant circulé dans la chambre,

— un appareil (31) de mesure du débit de liquide branché en série entre l'ouverture de sortie (22) de l'enceinte et un deuxième réservoir (32),

— un circuit d'asservissement (33) recevant l'information du débit mesuré par l'appareil (31) et capable de commander la pompe (19) pour maintenir un rapport constant prédéterminé entre ce débit et celui de la pompe.

— et un organe (30) commandable de refoulement du liquide, branché entre l'ouverture de sortie (22) de l'enceinte et l'appareil (31) de mesure, pour exercer, pendant une durée prédéterminée, une deuxième pression constante de liquide sur la surface externe de la pièce poreuse (8), en sens inverse de celui de la première pression constante, caractérisé en ce que, le filtre (6) étant un premier filtre, la première pression constante étant une pression prédéterminée ($P_1$), la deuxième pression constante étant une pression prédéterminée ($P_2$) grande par rapport à ($P_1$), le dispositif comporte en outre

— un deuxième filtre (20) identique au premier filtre (6), l'entrée du deuxième filtre étant reliée à l'ouverture (22) de sortie de l'enceinte du premier filtre par une première canalisation (21), la sortie de la chambre de filtration du deuxième filtre étant fermée, l'ouverture (27) de sortie de l'enceinte du deuxième filtre étant reliée à l'appareil (31) de mesure de débit à travers l'organe (30) de refoulement,

— des moyens (25, 26) pour imprimer au liquide contenu dans la chambre du deuxième filtre (20) ladite vitesse prédéterminée parallèlement à la surface interne de la pièce poreuse (23) de cette chambre,

— un manomètre (41) pour mesurer la pression ($P_3$) du liquide circulant dans la première canalisation (21),

— des moyens (29) pour maintenir constante la pression ($P_4$) du liquide circulant dans une deuxième canalisation (28) lorsque l'organe (30) de refoulement ne fonctionne pas, cette deuxième canalisation reliant la sortie de l'organe de refoulement à l'entrée de l'appareil (31) de mesure de débit,

— un circuit (34) de traitement recevant les informations des pressions ($P_1$, $P_2$, $P_3$, et $P_4$), ce circuit étant capable de déterminer d'une part la valeur de

$$A = P_1 - 2 P_3 + P_4$$

et d'autre part la valeur de

$$B = \frac{K}{2 N} (P_2 - 2 P_1 + P_4) \,.$$

K étant un coefficient de sécurité prédéterminé inférieur à 1, et N un coefficient prédéterminé dépendant de la membrane des pièces poreuses (8, 23)

— et un circuit (35) de commande relié au circuit (34) de traitement et à l'organe (30) de refoulement, ce circuit (35) de commande étant capable de délivrer un signal de commande lorsque les valeurs de A et de B déterminées par le circuit (34) de traitement sont égales entre elles, ce signal de commande déclenchant le fonctionnement de l'organe (30) de refoulement.

2. Dispositif selon la revendication 1, caractérisé en ce qu'il comporte en outre une horloge (71) reliée au circuit de commande pour mesurer l'intervalle de temps $\Delta t_1$ compris entre le début de la filtration et l'instant où l'organe (30) de refoulement est actionné pour la première fois, ainsi que les intervalles de temps $\Delta t_2$, $\Delta t_3$ ... $\Delta t_n$ séparant les instants successifs de déclenchement de l'organe (30) de refoulement,

— une mémoire (72) reliée à l'horloge et capable de conserver les informations des intervalles de temps $\Delta t_1$, $\Delta t_2$ ... $\Delta t_n$,

— au moins un groupe de filtration, comportant

un troisième filtre (56) analogue au premier filtre (6) mais ayant une surface de filtration égale ou supérieure à celle du premier filtre,

des moyens (51, 55) pour introduire le liquide (52) dans la chambre du troisième filtre (56) sous une pression constante $Q_1$,

des moyens (60, 59) pour imprimer au liquide contenu dans la chambre du troisième filtre (56) une vitesse identique à celle du liquide contenu dans la chambre du premier filtre (6), parallèlement à la surface interne de la pièce poreuse de cette chambre

une autre pompe (68) reliée à la sortie de la chambre du troisième filtre et à un troisième réservoir (67) pour prélever une partie du liquide ayant circulé dans la chambre du troisième filtre,

**0 121 105**

un autre appareil (64) de mesure du débit de liquide, branché entre l'ouverture (61) de sortie de l'enceinte du troisième filtre (56) et un quatrième réservoir (62),

un autre circuit d'asservissement (69) recevant l'information du débit mesuré par l'autre appareil de mesure (64) et capable de commander l'autre pompe (68) pour maintenir ledit rapport constant prédéterminé entre ce débit et celui de l'autre pompe,

un autre organe (63) commandable de refoulement du liquide, branché entre l'ouverture (61) de sortie de l'enceinte du troisième filtre et l'autre appareil (64) de mesure de débit, et capable d'exercer, pendant ladite durée prédéterminée, une pression constante $Q_2$ de liquide sur la surface externe de la pièce poreuse (58) du troisième filtre (56), en sens inverse de celui de la pression $Q_1$,

des moyens (66) pour maintenir constante la pression $Q_4$ du liquide circulant dans une troisième canalisation (65) lorsque l'autre organe (63) de refoulement ne fonctionne pas, cette troisième canalisation reliant la sortie de l'autre organe (63) de refoulement à l'entrée de l'autre appareil (64) de mesure de débit, les valeurs de $Q_1$, $Q_2$ et $Q_4$ étant définies par les relations suivantes

$$Q_1 = \frac{P_1 + P_4}{2}$$

$$Q_2 = \frac{P_2 + P_4}{2}$$

$$Q_4 = P_4$$

et un autre circuit de commande (70) relié à ladite mémoire (72) pour commander le fonctionnement de l'autre organe (63) de refoulement à partir du début de la filtration du groupe, suivant les intervalles de temps $\Delta t_1$, $\Delta t_2$ ... $\Delta t_n$.

3. Dispositif selon la revendication 1, caractérisé en ce que la pièce poreuse (8) est un tube en céramique, ladite membrane étant tubulaire, cette pièce comportant un support tubulaire disposé coaxialement autour de la membrane et solidaire de cette membrane, les pores du support ayant une dimension supérieure à celle des particules, contenues dans le liquide à filtrer.

4. Dispositif selon la revendication 1, caractérisé en ce que lesdits moyens pour imprimer au liquide contenu dans la chambre une vitesse prédéterminée parallèle à ladite surface interne comportent une autre pompe dont l'entrée et la sortie sont respectivement reliées à la sortie et à l'entrée de la chambre de filtration des filtres (6, 20).

5. Dispositif selon la revendication 3, caractérisé en ce que lesdits moyens pour imprimer au liquide contenu dans la chambre une vitesse prédéterminée parallèle à ladite surface interne, comportent un noyau (11) cylindrique monté en rotation coaxialement à l'intérieur du tube (8) à une vitesse de rotation prédéterminée.

**Claims**

1. A device for filtering a liquid containing particles in suspension, the device including :
— a filter (6) comprising
a filter chamber having an inlet and an outlet for said liquid, a portion of the wall of said chamber being constituted by a porous member (8) of sintered material having an inside surface facing the inside volume of the chamber and an outside surface facing the other way, the inside and outside surfaces being parallel to each other, the porous member including a membrane one of whose surfaces constitutes said inside surface, the pores in the membrane having a dimension which is smaller than that of the particles to be filtered contained in said liquid, each pore being in communication with the adjacent pores,

and an enclosure (7) surrounding said outside surface, this enclosure being provided with an outlet opening (22),
— means (1, 3, 4) for feeding the liquid into the chamber *via* its inlet and at a first constant pressure,
— means (11-16) for impressing on the liquid contained inside the chamber a predetermined speed parallel to the said inside surface, a portion of the liquid passing through the porous member (8) and being received in the enclosure,
— a pump (19) connected to the outlet of the chamber and to a first tank (18) for removing another portion of the liquid that has circulated inside the chamber,
— a liquid flow rate measuring apparatus (31) which is connected in series between the outlet opening (22) of the enclosure and a second tank (32),
— a servo-control circuit (33) receiving the information concerning the flow rate measured by the apparatus (31) and capable of controlling the pump (19) to maintain a constant predetermined ratio between this flow rate and the pump flow rate,
— and a controllable liquid rejection unit (30) connected between the outlet opening (22) of the enclosure and the measuring apparatus (31) for applying, during a predetermined period of time, a

8

second constant liquid pressure onto the outside surface of the porous member (8), in opposition to that of the first constant pressure, characterized in that, the filter (6) being a first filter, the first constant pressure being a predetermined pressure $(P_1)$, the second constant pressure being a predetermined pressure $(P_2)$ greater than $(P_1)$, the device further comprises

— a second filter (20) identical to the first filter (6), the inlet to the second filter being connected to the outlet opening (22) of the enclosure of the first filter by a first pipe (21), the outlet of the filter chamber of the second filter being closed, the outlet opening (27) of the enclosure of the second filter being connected to the flow rate measuring apparatus (31) via the rejection unit (30),

— means (25, 26) for applying on the liquid contained in the chamber of the second filter (20) said predetermined speed parallel to the inside surface of the porous member (23) of said chamber,

— a manometer (41) for measuring the pressure $(P_3)$ of the liquid flowing in said first pipe (21),

— means (29) for maintaining the pressure $(P_4)$ of the liquid flowing in a second pipe (28) constant when the rejection unit (30) is inoperative, said second pipe connecting the outlet of the rejection unit to the inlet of the flow rate measuring apparatus (31),

— a processor circuit (34) receiving the informations representative of the pressure $(P_1, P_2, P_3$ and $P_4)$, this circuit being capable of determining on the one hand the value

$$A = P_1 - 2 P_3 + P_4$$

and on the other hand the value

$$B = \frac{K}{2 N} (P_2 - 2 P_1 + P_4) ,$$

where K is a predetermined safety coefficient smaller than 1, and N is a predetermined coefficient depending on the membrane of the porous members (8, 23),

— and a control circuit (35) connected to the processor circuit (34) and to the rejection unit (30), this control circuit (35) being capable of delivering a control signal when the values A and B as determined by the processor circuit (34) are equal to each other, this control signal causing said rejection unit (30) to become operative.

2. A device according to claim 1, characterized in that it further includes a clock (71) connected to the control circuit for measuring the time interval $\Delta t_1$ comprised between the beginning of filtering and the first instant at which the rejection unit (30) is started, and likewise for measuring the time intervals $\Delta t_2, \Delta t_3 \ldots \Delta t_n$ separating successive instants at which the rejection unit (30) is started,

— a memory (72) connected to the clock and capable of storing the informations of the time intervals $\Delta t_1, \Delta t_2, \ldots \Delta t_n,$

— at least one filter equipement comprising

a third filter (56) analogous to the first filter (6) but having a filter surface which is equal to or greater than the filter surface of the first filter,

means (51, 55) for feeding the liquid (52) into the chamber of the third filter (56) at a constant pressure $Q_1,$

means (60, 59) for impressing on the liquid contained in the chamber of the third filter (56) a speed identical to that of the liquid contained in the chamber of the first filter (6), parallelly to the inner surface of the porous member of this chamber,

another pump (68) connected to the outlet of the chamber of the third filter and to a third tank (67) for extracting a portion of the liquid that has circulated in the chamber of the third filter,

another liquid flow rate measuring apparatus (64) connected between the outlet opening (61) of the enclosure of the third filter (56) and a fourth tank (62),

another servo-control circuit (69) receiving the information of the flow-rate measured by said other measuring apparatus (64) and capable of controlling the other pump (68) to maintain said constant predetermined ratio between this measured flow rate and that of the other pump,

another controllable rejection unit (63) connected between the outlet opening (61) of the enclosure of the third filter and the other flow rate measuring apparatus (64), and capable of exerting during said predetermined period of time a constant liquid pressure $Q_2$ on the outside surface of the porous member (58) of the third filter (56) in opposition to that of the pressure $Q_1,$

means (66) for maintaining the liquid pressure $Q_4$ in a third pipe (65) constant while the other rejection unit (63) is inoperative, said third pipe connecting the outlet of the other rejection unit (63) to the inlet of the other flow rate measuring apparatus (64), the values $Q_1, Q_2$ and $Q_4$ being defined by the following relationships

$$Q_1 = \frac{P_1 + P_4}{2}$$

$$Q_2 = \frac{P_2 + P_4}{2}$$

$$Q_4 = P_4$$

and another control circuit (70) connected to said memory (72) to control the operation of the other rejection unit (63) from the start of the filtration of the group according to the time intervals $\Delta t_1$, $\Delta t_2$, ... $\Delta t_n$.

3. A device according to claim 1, characterized in that said porous member (8) is a ceramic tube, said membrane being tubular, this member comprising a tubular support disposed coaxially around the membrane and integral therewith, the pores of the support having a dimension which is larger than that of the particles contained in the liquid to be filtered.

4. A device according to claim 1, characterized in that said means for impressing a predetermined speed parallel to said inside surface on the liquid contained in the filter chamber comprise another pump having its inlet and its outlet connected respectively to the outlet and the inlet of the filter chamber of the filters (6, 20).

5. A device according to claim 3, characterized in that said means for impressing a predetermined speed parallel to said inside surface on the liquid contained in the filter chamber comprise a cylindrical core (11) which is rotatably mounted coaxially inside the tube (8) in order to rotate at a predetermined speed.

## Patentansprüche

1. Vorrichtung zum Filtern einer Flüssigkeit, die Partikel in Suspension enthält, mit

— einem Filter (6), das aufweist

eine Filterkammer mit einem Eingang und einem Ausgang für die Flüssigkeit, wobei ein Teil der Wand dieser Kammer aus einem porösen Bauteil (8) aus gesintertem Material besteht, dessen innere Oberfläche zum Innenraum der Kammer hinzeigt und deren äußere Oberfläche entgegengesetzt liegt, wobei die innere und die äußere Oberfläche zueinander parallel sind und das poröse Bauteil eine Membran aufweist, von der eine Oberfläche die innere Oberfläche bildet, wobei die Poren der Membran geringere Abmessungen als die in der Flüssigkeit enthaltenen Partikel haben, wobei jede Pore mit den benachbarten Poren in Verbindung steht,

und einen Behälter (7), der die äußere Oberfläche umgibt und mit einer Ausgangsöffnung (22) versehen ist,

— Mitteln (1, 3, 4), um die Flüssigkeit unter einem ersten konstanten Druck durch den Eingang in die Kammer einzuführen,

— Mitteln (11-16), um der in der Kammer enthaltenen Flüssigkeit eine vorbestimmte Geschwindigkeit parallel zur inneren Oberfläche zu verleihen, wobei ein Teil der Flüssigkeit das poröse Bauteil (8) durchquert und von dem Behälter aufgenommen wird,

— einer Pumpe (19), die mit dem Ausgang der Kammer und einem ersten Tank (18) verbunden ist, um einen anderen Teil der Flüssigkeit zu entnehmen, der durch die Kammer geströmt ist,

— einem Meßapparat (31) für den Flüssigkeitsdurchsatz, der in Reihe zwischen der Ausgangsöffnung (22) des Behälters und einem zweiten Tank (32) angeschlossen ist,

— einem Steuerkreis (33), dem die Information des vom Meßapparat (31) gemessenen Durchsatzes zugeführt wird und der die Pumpe (19) so steuern kann, daß ein konstantes vorbestimmtes Verhältnis zwischen diesem Durchsatz und dem der Pumpe aufrechterhalten wird,

— und einem steuerbaren Organ (30) zur Abgabe der Flüssigkeit, das zwischen der Ausgangsöffnung (22) des Bereichs und dem Meßapparat (31) angeschlossen ist, um während einer vorbestimmten Zeitdauer einen zweiten konstanten Flüssigkeitsdruck auf die äußere Oberfläche des porösen Bauteils (8) in Gegenrichtung zum ersten konstanten Druck auszuüben, dadurch gekennzeichnet, daß das Filter (6) ein erstes Filter ist und der erste konstante Druck ein vorbestimmter Druck ($P_1$), der zweite konstante Druck ein vorbestimmter, in bezug auf ($P_1$) großer Druck ($P_2$) ist, und daß die Vorrichtung außerdem aufweist

— ein zweites Filter (20), das dem ersten Filter (6) gleicht, wobei der Eingang des zweiten Filters mit der Ausgangsöffnung (22) des Behälters des ersten Filters über eine erste Leitung (21) verbunden ist, während der Ausgang der Filterkammer geschlossen ist, wobei die Ausgangsöffnung (27) des Behälters des zweiten Filters mit dem Meßapparat (31) für den Durchsatz durch das Abgabeorgan (30) verbunden ist,

— Mittel (25, 26), um der in der Kammer des zweiten Filters (20) enthaltenen Flüssigkeit die genannte vorbestimmte Geschwindigkeit parallel zur inneren Oberfläche des porösen Bauteils (23) dieser Kammer zu verleihen,

— ein Manometer (41), um den Druck ($P_3$) der in der ersten Leitung (21) strömenden Flüssigkeit zu messen,

— Mittel (29), um den Druck ($P_4$) der in einer zweiten Leitung (28) fließenden Flüssigkeit konstant zu halten, wenn das Abgabeorgan (30) nicht arbeitet, wobei diese zweite Leitung den Ausgang des Abgabeorgans mit dem Eingang des Durchsatz-Meßapparats (31) verbindet,

— einen Verarbeitungskreis (34), der die Informationen bezüglich der Drücke ($P_1$, $P_2$, $P_3$ und $P_4$) zugeführt erhält und einerseits den Wert von

$$A = P_1 - 2 P_3 + P_4$$

und andererseits den Wert von

$$B = \frac{K}{2N}(P_2 - 2P_1 + P_4) \, ,$$

bestimmen kann, wobei K ein vorbestimmter Sicherheitskoeffizient kleiner 1 und N ein vorbestimmter Koeffizient ist, der von der Membran der porösen Bauteile (8, 23) abhängt,

— und einen Steuerkreis (35), der mit dem Verarbeitungskreis (34) und dem Abgabeorgan (30) verbunden ist und ein Steuersignal liefern kann, wenn die Werte von A und B, die von dem Verarbeitungskreis (34) bestimmt werden, untereinander gleich sind, wobei dieses Steuersignal den Betrieb des Abgabeorgans (30) auslöst.

2. Vorrichtung nach Anspruch 1, dadurch gekennzeichnet, daß sie weiter einen Taktgeber (71) aufweist, der mit dem Steuerkreis verbunden ist, um das Zeitintervall $\Delta t_1$ zu messen, das zwischen dem Beginn des Filtrierens und dem Moment liegt, an dem das Abgabeorgan (30) zum ersten Mal in Betrieb geht, sowie die Zeitintervalle $\Delta t_1$, $\Delta t_3$ ... $\Delta t_n$, die die aufeinanderfolgenden Auslösezeitpunkte des Abgabeorgans (30) voneinander trennen,

— einen Speicher (72), der mit dem Taktgeber verbunden ist und die Informationen der Zeitintervalle $\Delta t_1$, $\Delta t_2$ ... $\Delta t_n$ speichern kann,

— mindestens eine Filtergruppe, die aufweist

ein drittes Filter (56), das dem ersten Filter (6) gleicht, aber eine Filteroberfläche aufweist, die gleich oder größer als die des ersten Filters ist,

Mittel (51, 55), um die Flüssigkeit (52) unter einem konstanten Druck $Q_1$ in die Kammer des dritten Filters (56) einzuführen,

Mitteln (60, 59), um der in der Kammer des dritten Filters enthaltenen Flüssigkeit eine Geschwindigkeit zu verleihen, die gleich der der in der Kammer des ersten Filters (6) enthaltenen Flüssigkeit ist, parallel zur inneren Oberfläche des porösen Bauteils dieser Kammer,

eine weitere Pumpe (68), die mit dem Ausgang der Kammer des dritten Filters und mit einem dritten Tank (67) verbunden ist, um einen Teil der Flüssigkeit zu entnehmen, die durch die Kammer des dritten Filters geströmt ist,

einen weiteren Meßapparat (64) für den Flüssigkeitsdurchsatz, der zwischen der Ausgangsöffnung (61) des Behälters des dritten Filters (56) und einem vierten Tank (62) angeschlossen ist,

einen weiteren Steuerkreis (69), der die Information des vom anderen Meßapparat (64) gemessenen Durchsatzes erhält und die andere Pumpe (68) steuern kann, um das vorbestimmte konstante Verhaltnis zwischen diesem Durchsatz und dem der anderen Pumpe aufrechtzuerhalten,

ein weiteres steuerbares Flüssigkeits-Abgabeorgan (63), das zwischen der Ausgangsöffnung (61) des Behälters des dritten Filters und dem anderen Durchsatz-Meßapparat (64) angeschlossen ist, und das während der genannten vorbestimmten Zeitdauer einen konstanten Flüssigkeitsdruck $Q_2$ auf die äußere Oberfläche des porösen Bauteils (58) des dritten Filters (56) in Gegenrichtung zum Druck $Q_1$ ausüben kann,

Mittel (66), um den Druck $Q_4$ der in einer dritten Leitung (65) strömenden Flüssigkeit konstant zu halten, wenn das andere Abgabeorgan (63) nicht arbeitet, wobei diese dritte Leitung den Ausgang des anderen Abgabeorgans (63) mit dem Eingang des anderen Durchsatz-Meßapparats (64) verbindet, und die Werte von $Q_1$, $Q_2$ und $Q_4$ von den folgenden Gleichungen definiert werden

$$Q_1 = \frac{P_1 + P_4}{2}$$

$$Q_2 = \frac{P_2 + P_4}{2}$$

$$Q_4 = P_4$$

und einen weiteren Steuerkreis (70), der mit dem Speicher (72) verbunden ist, um den Betrieb des anderen Abgabeorgans (63) ausgehend vom Beginn des Filtrierens der Gruppe gemäß den Zeitintervallen $\Delta t_1$, $\Delta t_2$ ... $\Delta t_n$ zu steuern.

3. Vorrichtung nach Anspruch 1, dadurch gekennzeichnet, daß das poröse Bauteil (8) ein Keramikrohr ist, die Membran rohrförmig ist, wobei dieses Bauteil einen rohrförmigen Träger aufweist, der koaxial um die Membran herum angeordnet und fest mit ihr verbunden ist, wobei die Poren des Trägers einen größeren Durchmesser als die in der zu filternden Flüssigkeit enthaltenen Partikel haben.

4. Vorrichtung nach Anspruch 1, dadurch gekennzeichnet, daß die Mittel, um der in der Kammer enthaltenen Flüssigkeit eine vorbestimmte Geschwindigkeit parallel zur inneren Oberfläche zu verleihen, eine weitere Pumpe aufweisen, deren Eingang und Ausgang je mit dem Ausgang und dem Eingang der Filterkammer der Filter (6, 20) verbunden sind.

5. Vorrichtung nach Anspruch 3, dadurch gekennzeichnet, daß die Mittel, um der in der Kammer

**0 121 105**

enthaltenen Flüssigkeit eine vorbestimmte Geschwindigkeit parallel zur inneren Oberfläche zu verleihen, einen zylindrischen Kern (11) aufweisen, der drehbar koaxial im Inneren des Rohrs (8) mit einer vorbestimmten Rotationsgeschwindigkeit angeordnet ist.

FIG.1

0 121 105

FIG.2

0 121 105